# EUROPEAN PATENT APPLICATION

(11) **EP 4 383 422 A1**
(43) Date of publication of application: **12.06.2024**
(21) Application number: 23835797.4
(22) Date of filing: 04.07.2023
(51) Int. Cl.: H01M 50/231, H01M 50/224, H01M 50/227, H01M 50/358, H01M 50/30, H01M 50/24, H01M 50/204

(54) **BATTERY MODULE FRAME**

(30) Priority: 07.07.2022 KR 20220083855
(71) Applicant: LG Energy Solution, Ltd., Seoul 07335 (KR)
(72) Inventor: KIM, Ki Young, Daejeon 34122 (KR); LEE, Hyoung Suk, Daejeon 34122 (KR); SHIN, Ju Hwan, Daejeon 34122 (KR); LEE, Jae Hyun, Daejeon 34122 (KR); JANG, Byung Do, Daejeon 34122 (KR)
(74) Representative: Plasseraud IP
(86) International application number: PCT/KR2023/009402
(87) International publication number: WO 2024/010331

(57) **Abstract**

A polyhedral battery module frame in which a plurality of battery cells are accommodated includes a first layer made of an aluminum or aluminum alloy material, a second layer stacked on the first layer and made of a reinforced plastic material with a higher melting point than the first layer, and a third layer stacked on the second layer and made of an aluminum or aluminum alloy material.

## Description

### [Technical Field]

The present invention relates a battery module frame, and more particularly, to a battery module frame capable of suppressing the spread of secondary damage such as an external fire or explosion by preventing damage to and structural collapse of a frame even when a battery cell mounted inside the frame overheats and catches fire.

The application claims the benefit of priority based on Korean Patent Application No. 10-2022-0083855 dated July 7, 2022, and all contents disclosed in the document of the Korean Patent Application are included as part of the specification.

### [Background Art]

Unlike primary batteries, secondary batteries can be recharged and have been studied and developed extensively in recent years due to their potential for miniaturization and large capacity. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. An electrode assembly mounted inside a battery case in a secondary battery is a chargeable or dischargeable power generating element consisting of a stacked structure of electrodes and a separator.

Since continuous use of a secondary battery for a long period of time is required, it is necessary to effectively control the heat generated during a charging and discharging process. When a secondary battery is improperly cooled, the resulting rise in temperature leads to an increase in current, which causes a positive feedback chain reaction that causes the temperature to rise again, ultimately triggering a catastrophic state of thermal runaway.

In addition, when secondary batteries are grouped in the form of modules or packs, thermal runaway occurring in one secondary battery causes a thermal propagation phenomenon in which other secondary batteries in the surrounding area are sequentially overheated.

Furthermore, when the frame of the battery module causes structural collapse due to a flame generated from an overheated secondary battery, a large amount of oxygen is supplied to the internal flame, which may spread to secondary damage such as a large fire or explosion. Hence, there is a need for measures to prevent structural collapse of such a frame.

### [Related Document]

(Patent Document 1) Korean Patent Publication No. 2018-0060997 (published on June 7, 2018)

### [Technical Problem]

The present invention is directed to providing a battery module frame capable of suppressing the spread of secondary damage such as an external fire or explosion by preventing the structural collapse of a frame even when a battery cell mounted inside overheats and generates a flame.

However, the technical problem to be solved by the present invention is not limited to the above-described problem, and other problems that are not described can be clearly understood by those skilled in the art from the description of the present invention described below.

### [Technical Solution]

One aspect of the present invention provides a battery module frame in which a plurality of battery cells are accommodated, and as an example, the battery module frame includes a first layer made of an aluminum or aluminum alloy material, a second layer stacked on the first layer and made of a reinforced plastic material with a higher melting point than the first layer, and a third layer stacked on the second layer and made of an aluminum or aluminum alloy material.

The battery module frame may be formed by press processing on the first to third layers in a stacked state.

A fastening portion is formed on the first or third layer, and the fastening portion may be a welded portion or bolted portion.

The reinforced plastic material may be a material in which aromatic nylon fibers and a thermosetting resin are combined.

The reinforced plastic material may be a glass fiber reinforced plastic.

In at least one side of the battery module frame, ventilation portions exposing the second layer may be formed in portions of the first layer and the third layer.

The ventilation portions may be formed in an upper surface of the battery module frame.

The ventilation portions may be spaced from each other in a diagonal direction.

The ventilation portions comprise an inner ventilation portion formed in the first layer and outer ventilation portions formed in the third layer which do not overlap.

The outer ventilation portions formed in the third layer may be diagonally spaced apart from each other with the inner ventilation portion formed in the first layer as a center.

The outer ventilation portions may include a plurality of ventilation holes with a larger ventilation area as a distance from the inner ventilation portion increases.

### [Advantageous Effects]

A battery module frame of the present invention having the above configuration is made of a composite material in which structural layers each made of an aluminum material with a heat-resistant reinforcing material, such as a glass fiber reinforced plastic, interposed therebetween are combined in the form of a sandwich. Therefore, the battery module frame has a lightweight frame structure, and even when a flame occurs inside the frame, the heat-resistant reinforcing material suppresses structural collapse, which prevents a large amount of oxygen from being supplied to the flame inside the frame.

Also, since the inside of the battery module frame is made of a glass fiber reinforced plastic, and the outside thereof is covered with a structural layer of an aluminum material, assembly structures can be easily implemented by welding or bolts.

Further, the risk of fire can be further reduced by optimizing an arrangement and shape of a ventilation portion and effectively suppressing the propagation of flames generated internally.

However, the technical effects that can be achieved through the present invention are not limited to the effects described above, and other effects that are not described can be clearly understood by those skilled in the art from the description of the present invention described below.

### [Brief Description of the Drawings]

The following drawings attached to this specification illustrate exemplary embodiments of the present invention, and together with the detailed description of the present invention described below, serve to provide further understanding of the technical spirit of the present invention. Therefore, the present invention should not be construed as being limited to the details described in such drawings.
FIG. 1 is a diagram illustrating an example of a battery module including a battery module frame according to the present invention.
FIG. 2 is a diagram illustrating a cross-sectional structure of a battery module frame before press molding is performed.
FIG. 3 is a diagram illustrating an example of forming a main frame through press molding.
FIG. 4 is a diagram illustrating an example in which ventilation holes are formed in an upper plate.
FIG. 5 is a diagram illustrating an example of joining a main frame and an upper plate by welding.
FIG. 6 is a diagram illustrating an example of coupling a main frame and an upper plate with bolts.
FIG. 7 is a diagram illustrating an arrangement structure of an inner ventilation portion and an outer ventilation portion.

### [Best Modes of the Invention]

Since the present invention may be variously changed and have various embodiments, specific embodiments will be described in detail below.

However, it should be understood that there is no intention to limit the present invention to specific embodiments, and on the contrary, the present invention is to cover all modifications, equivalents, and alternatives falling within the spirit and scope of the present invention.

In the present invention, it should be understood that terms such as "include" and "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case disposed at the bottom as well as the top.

One aspect of the present invention provides a polyhedral battery module frame that accommodates a plurality of battery cells therein, and as an example, the battery module frame includes a first layer made of an aluminum or aluminum alloy material, a second layer stacked on the first layer and made of a reinforced plastic material with a higher melting point than the first layer, and a third layer stacked on the second layer and made of an aluminum or aluminum alloy material.

A battery module frame of the present invention having the above configuration is made of a composite material in which structural layers each made of an aluminum material with a heat-resistant reinforcing material, such as a glass fiber reinforced plastic, interposed therebetween are combined in the form of a sandwich. Therefore, the battery module frame has a lightweight frame structure, and even when a flame occurs inside the frame, the heat-resistant reinforced plastic material suppresses structural collapse, which prevents a large amount of oxygen from being supplied to the flame inside the frame.

Also, in the battery module frame, as an inner heat-resistant reinforced plastic material is surrounded by an outer structural layer of an aluminum material, assembly structures can be easily implemented by welding or bolts.

### [Modes of the Invention]

Hereinafter, specific embodiments of a battery module frame of the present invention will be described in detail with reference to the attached drawings. For reference, front and rear directions or up, down, left, and right directions for designating relative positions used in the following description are intended to help the understanding of the present invention and are based on directions shown in the drawings unless otherwise specified.

### [First Embodiment]

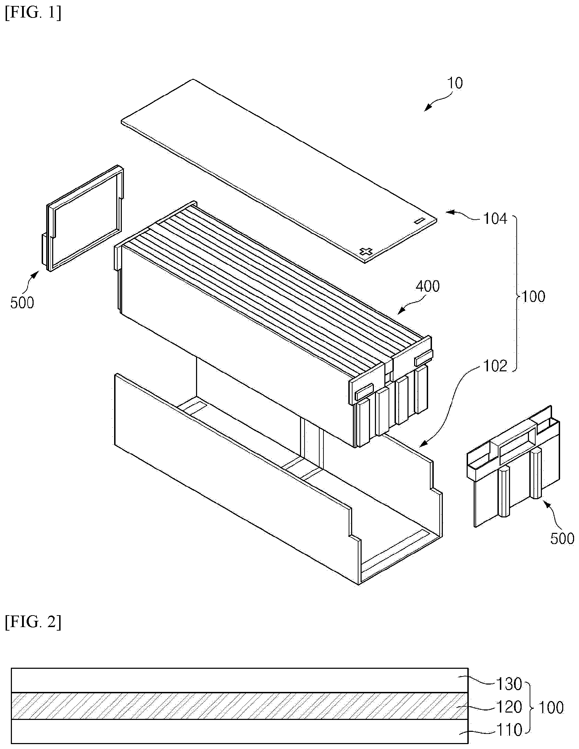

FIG. 1 is a diagram illustrating an example of a battery module 10 including a battery module frame 100 according to the present invention. The battery module 10 is referred to as a battery assembly in which a predetermined number of battery cells are grouped and placed in a frame to protect the battery cells from external impacts, heat, vibrations, etc. The battery module 10 is made of a plurality of battery cells connected in series and/or parallel, and the plurality of battery cells are embedded in a mechanical structure, that is, the battery module frame 100, for protection.

Each battery cell plays a fundamental role in storing energy and supplying the energy to an external device when needed. However, since each battery cell has a small capacity, a module is made by combining the battery cells, and further, modules are combined to make a large battery pack.

The present invention relates to the battery module frame 100 that is a mechanical structure for protecting a plurality of battery cells. The battery module 10 illustrated as an example in FIG. 1 includes a battery cell assembly 400 in which a plurality of battery cells are connected in series and/or parallel to form one assembly. In addition, both ends of the battery cell assembly 400 are provided with structures that are mechanically and electrically coupled to an end plate assembly 500.

In addition, the battery module frame 100 includes a main frame 102, which has a "U"-shaped cross section and has a space for accommodating the battery cell assembly 400 therein, and an upper plate 104 covering an open upper surface of the main frame 102. Here, end plate assemblies 500 are coupled to both open sides of the battery module frame 100 to seal the battery module 10. In a broad sense, the end plate assembly 500 may be included in the battery module frame 100.

The battery module 10 has a polyhedral shape that accommodates a plurality of battery cells and has a hexahedral shape in FIG. 1, and a cross-sectional structure of the battery module frame 100 is illustrated in FIG. 2. That is, FIG. 2 illustrates the cross-sectional structure of the main frame 102 and the upper plate 104, and further, the end plate assembly 500 may also have the cross-sectional structure of FIG. 2.

Referring to FIG. 2, the battery module frame 100 includes a first layer 110 made of an aluminum or aluminum alloy material, and a second layer 120 made of a reinforced plastic material with a higher melting point than the first layer 110, and a third layer 130 stacked on the second layer 120 and made of an aluminum or aluminum alloy material.

That is, the battery module frame 100 of the present invention is made of a composite material in a sandwich form with structural layers formed of the first layer 110 and the third layer 130 made of aluminum materials and the second layer 120 made of a heat-resistant reinforced plastic material disposed between the structural layers. Here, the structural layers are the first layer 110 and the third layer 130 made of aluminum materials, which serve to maintain the basic mechanical structure of the battery module frame 100, that is, the shape and rigidity.

The second layer 120, which is interposed between the first layer 110 and the third layer 130 made of aluminum materials, is made of a reinforced plastic material with a higher melting point than that of the aluminum material. That is, the second layer 120 is formed of a heat-resistant reinforced plastic material that can maintain its shape even in a high-temperature environment in which the first layer 110 and the third layer 130 made of aluminum materials are melted by a flame generated from an overheated battery cell.

Since the battery module frame 100 of the present invention uses aluminum materials for structural layers with the second layer 120 made of a plastic material therebetween, a lightweight frame structure can be implemented through weight reduction by aluminum materials and plastic layers.

Also, even when the first layer 110 and the third layer 130 made of aluminum materials are locally melted by a high-temperature flame, the central second layer 120 made of a heat-resistant reinforced plastic material with a higher melting point suppresses structural collapse. Through this, the structure of the battery module frame 100 does not collapse and a large amount of oxygen is not supplied to the internal flame, thereby preventing accidents leading to large-scale fires.

In addition, in one embodiment of the present invention, the reinforced plastic material forming the second layer 120 may be made of a material combining aromatic nylon fibers and a thermosetting resin. For example, aromatic nylon fibers serving as reinforcing materials include glass fiber, carbon fiber, and Kevlar (trade name of Dupont, USA), and the thermosetting resin may be unsaturated polyester or epoxy resin.

Considering mechanical strength and heat resistance, it may be desirable to use a glass fiber reinforced plastic (GFRP) containing glass fiber as a material for the second layer 120. A glass fiber reinforced plastic is lightweight, has excellent mechanical strength and heat resistance, and is easy to manufacture due to its ability to be molded at room temperature and normal pressure.

Therefore, when the second layer 120 is formed with a glass fiber reinforced plastic with excellent heat resistance, a flame generated by thermal runaway of a battery cell is blocked by the second layer 120 of the battery module frame 100 of the present invention and cannot easily spread. Accordingly, a heat propagation phenomenon or external fire is effectively suppressed.

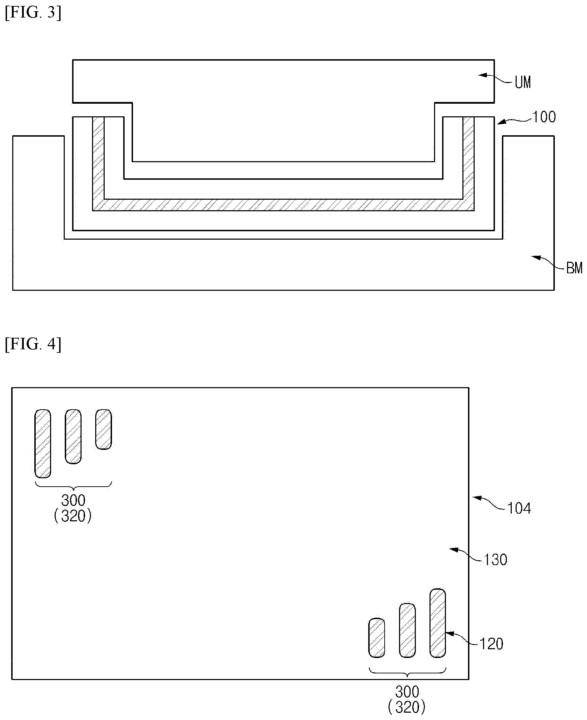

Meanwhile, FIG. 3 is a diagram illustrating an example of forming the main frame 102 through press molding. Referring to FIG. 3, the battery module frame 100 of the present invention may be formed by performing press processing on all the first to third layers 110 to 130 in a stacked flat plate state.

The second layer 120 made of a heat-resistant reinforced plastic material especially a glass fiber reinforced plastic, has a thin plate shape. Therefore, the flat plate form (see FIG. 2) is manufactured by laminating the second layer 120 made of the glass fiber reinforced plastic material between the first layer 110 and the third layer 130, which are made of aluminum materials, and then, as shown in FIG 3, the flat battery module frame 100 is placed between an upper mold UM and a bottom mold BM, and press processing is performed to make a main frame 102 with a "U"-shaped cross section.

That is, the first layer 110 and the third layer 130 are made of aluminum materials that are suitable for press processing because the aluminum materials easily undergo a forming process. Also, since the glass fiber reinforced plastic that forms the second layer 120 can be formed even at room temperature, the battery module frame 100 may be formed in various shapes through press processing.

As such, the battery module frame 100 of the present invention may be transformed into various forms through the press processing of a flat preliminary frame in which the second layer 120 made of a heat-resistant reinforced plastic material is laminated between the first layer 110 and the third layer 130 made of aluminum materials. Therefore, in terms of productivity, the battery module frame 100 of the present invention can be maintained at the same level as existing frames without a heat resistance reinforced plastic.

### [Second Embodiment]

Meanwhile, in the second embodiment of the present invention, a ventilation portion 300 may be formed in an upper plate 104 forming a battery module frame 100. FIG. 4 illustrates an example in which the ventilation portion 300 is formed in the upper plate 104.

For reference, the second embodiment shows an example in which a ventilation hole is formed in the upper plate 104 of the battery module frame 100. This takes into account the nature of the flame propagating upward, and of course, the ventilation hole may be formed in a main frame 102. Here, a location of the ventilation hole needs to be selected in consideration of secondary damage to surrounding parts or an external fire caused by high-temperature gas or some flame ejected from the ventilation hole.

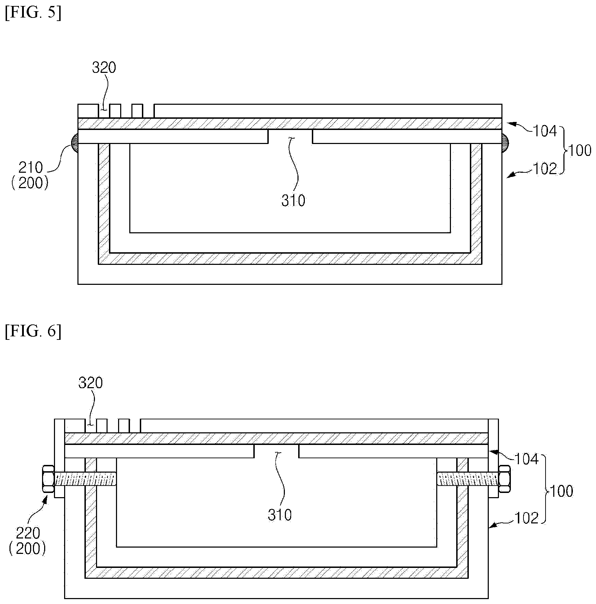

Referring to FIG. 4, in the upper plate 104 forming an upper surface of the battery module frame 100, an outer ventilation portion 320 is formed in a portion of a third layer 130. Additionally, a second layer 120 is exposed to the outside through the outer ventilation portion 320. In addition, referring to FIGS. 5 to 7, an inner ventilation portion 310 exposing the second layer 120 is formed in a first layer 110 of the upper plate 104.

The ventilation portion 300 is portions of the first layer 110 and the third layer 130 of the battery module frame 100, and the second layer 120 is exposed through the ventilation portion 300. When a flame occurs within the battery module 10 to increase the temperature and pressure, portions of the first layer 110 and the third layer 130 made of aluminum materials with a relatively low melting point in the battery module frame 100 are melted and high-temperature gas and the flame burst outward. The site where the flame bursts outward may be determined by the point of origin of the fire or the local strength of the battery module frame 100, but it is difficult to predict such a site.

Accordingly, in the second embodiment of the present invention, the ventilation portion 300 is formed by intentionally cutting portions of the first layer 110 and the third layer 130, and through this, the location of the ventilation portion 300 is limited so that the high temperature gas and flame are ejected from a designated point, that is, the ventilation portion 300. Therefore, the risk of secondary damage such as an external fire can be greatly reduced by appropriately designing the location of the ventilation portion 300.

In one embodiment of the present invention, the ventilation portion 300 may be formed in one surface, and in the example of the drawing, a plurality of ventilation portions 300 may be formed diagonally in the upper surface of the battery module frame 100. Since the ventilation portion 300 is an area in which the flame is ejected out of the third layer 130 via the second layer 120 made of a heat-resistant reinforced plastic material, when the plurality of ventilation portions 300 are formed, an adequate distance therebetween is secured so that the flame gradually loses heat as the flame passes through the second layer 120 over a sufficient distance and period of time.

Also, it may be desirable that the inner ventilation portion 310 formed in the first layer 110 and the outer ventilation portion 320 formed in the third layer 130 do not overlap. This is because, when the inner ventilation portion 310 and the outer ventilation portion 320 are directly connected, it is difficult to secure a flame path sufficient for the second layer 120 to exert its flame quenching effect.

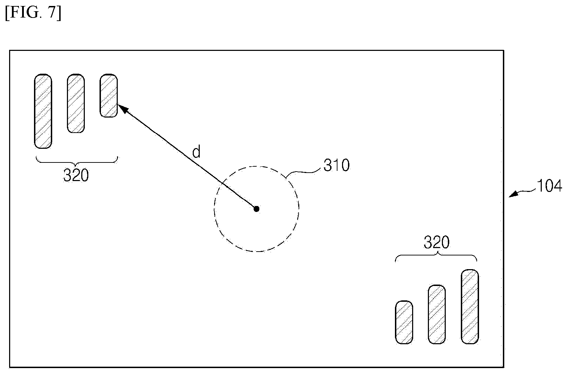

For example, as shown in FIG. 7, the outer ventilation portions 320 formed in the third layer 130 may be diagonally spaced apart from each other with the inner ventilation portion 310 formed in the first layer 110 as the center. Due to this arrangement of the inner ventilation portion 310 and the outer ventilation portion 320, the inner ventilation portion 310 and the outer ventilation portion 320 do not overlap, and the distance between the outer ventilation portions 320 increases.

Additionally, the outer ventilation portion 320 may be composed of a plurality of ventilation holes formed as a group. In this case, it may be desirable to have the outer ventilation portion 320 have a stepwise size arrangement so that the greater the distance d from the inner ventilation portion 310, the larger the ventilation area of the ventilation hole. This is because the flame's path, which passes through the reinforced plastic layer of the second layer 120, is longer, allowing the flame to lose enough heat. This means that an extended flame path through the reinforced plastic layer of the second layer 120 ensures that the sufficiently cooled flame is expelled out of the ventilation hole at a long distance d from the inner ventilation portion 310. This design is advantageous in terms of flame quenching.

In addition, a fastening portion 200 may be formed on the first layer 110 or the third layer 130, which is made of an aluminum material, and the fastening portion 200 may be a welded portion 210 or a bolted portion 220. FIG. 5 illustrates an example in which the fastening portion 200 is formed as the welded portion 210, and FIG. 6 illustrates an example in which the fastening portion 200 is formed as the bolted portion 220.

The battery module frame 100 of the present invention includes the second layer 120 made of a heat resistance reinforced plastic that prevents structural collapse even in high-temperature flames and also has a flame quenching function. Although it is difficult to construct a mechanical fastening structure with the second layer 120, fastening structures can be easily implemented using the aluminum layer surrounding the inside and outside of the battery module frame 100 with the second layer 120 embedded between the first layer 110 and the third layer 130, which are made of aluminum materials, by welding or bolts.

For reference, FIGS. 5 and 6 illustrate an example in which the welded portion 210 and the bolted portion 220 constitute the fastening portion 200, respectively. Of course, one battery module frame 100 may include the welded portion 210 and the bolted portion 220 as the fastening portion 200 in a complex manner.

In the above, the present invention has been described in more detail through drawings and examples. However, since the configurations described in the drawings or examples described in this specification are only one embodiment of the present invention and do not represent the entire technical idea of the present invention, it should be understood that there may be various equivalents and variations at the time of filing this application.

### [Description of reference numerals]

| | | | |
|---|---|---|---|
| 10: | battery module | 100: | battery module frame |
| 102: | main frame | 104: | upper plate |
| 110: | first layer | 120: | second layer |
| 130: | third layer | 200: | fastening portion |
| 210: | welded portion | 220: | bolted portion |
| 300: | ventilation portion | 310: | inner ventilation portion |
| 320: | outer ventilation portion | 400: | battery cell assembly |

| | | | |
|---|---|---|---|
| 500: | end plate assembly | | |
| UM: | upper molding | BM: | bottom molding |

## Claims

1. A battery module frame in which a plurality of battery cells are accommodated, comprising:
a first layer made of an aluminum or aluminum alloy material;
a second layer stacked on the first layer and made of a reinforced plastic material with a higher melting point than the first layer; and
a third layer stacked on the second layer and made of an aluminum or aluminum alloy material.

2. The battery module frame of claim 1, wherein the battery module frame is formed by performing press processing on the first to third layers in a stacked state.

3. The battery module frame of claim 2, wherein a fastening portion is formed on the first or third layer.

4. The battery module frame of claim 3, wherein the fastening portion is a welded portion or bolted portion.

5. The battery module frame of claim 1, wherein the reinforced plastic material is a material in which aromatic nylon fibers and a thermosetting resin are combined.

6. The battery module frame of claim 5, wherein the reinforced plastic material is a glass fiber reinforced plastic.

7. The battery module frame of claim 1, wherein, in at least one side of the battery module frame, ventilation portions exposing the second layer are formed in portions of the first layer and the third layer.

8. The battery module frame of claim 7, wherein the ventilation portions are formed in an upper surface of the battery module frame.

9. The battery module frame of claim 8, wherein the ventilation portions are spaced from each other in a diagonal direction.

10. The battery module frame of claim 8, wherein the ventilation portions comprise an inner ventilation portion formed in the first layer and outer ventilation portions formed in the third layer which do not overlap each other.

11. The battery module frame of claim 10, wherein the outer ventilation portions formed in the third layer are diagonally spaced apart from each other with the inner ventilation portion formed in the first layer as a center.

12. The battery module frame of claim 11, wherein the outer ventilation portions include a plurality of ventilation holes with a larger ventilation area as a distance from the inner ventilation portion increases.
